(19) Europäisches Patentamt
European Patent Office
Office européen des brevets

(11) **EP 4 135 072 A1**

(12) **EUROPEAN PATENT APPLICATION**
published in accordance with Art. 153(4) EPC

(43) Date of publication:
**15.02.2023 Bulletin 2023/07**

(21) Application number: **21784077.6**

(22) Date of filing: **07.04.2021**

(51) International Patent Classification (IPC):
*H01M 4/46* [(1974.07)]     *H01M 4/525* [(2010.01)]
*H01M 10/052* [(2010.01)]

(52) Cooperative Patent Classification (CPC):
**H01M 4/46; H01M 4/525; H01M 10/052;**
Y02E 60/10

(86) International application number:
**PCT/JP2021/014746**

(87) International publication number:
**WO 2021/206119 (14.10.2021 Gazette 2021/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.04.2020 JP 2020070382**

(71) Applicant: SUMITOMO CHEMICAL COMPANY,
LIMITED
Tokyo 103-6020 (JP)

(72) Inventors:
• YAMAGUCHI, Takitaro
  Tsukuba-shi, Ibaraki 300-3294 (JP)
• MATSUMOTO, Shingo
  Tsukuba-shi, Ibaraki 300-3294 (JP)
• KUMAGAI, Toshiaki
  Niihama-shi, Ehime 792-8521 (JP)
• MATSUO, Yoji
  Niihama-shi, Ehime 792-8521 (JP)

(74) Representative: Vossius & Partner
Patentanwälte Rechtsanwälte mbB
Siebertstraße 3
81675 München (DE)

(54) **LITHIUM SECONDARY BATTERY**

(57)     Provided is a lithium secondary battery including: an aluminum anode configured to occlude and release lithium ions; a cathode configured to occlude and release lithium ions; and an electrolyte, in which the aluminum anode is formed of an aluminum-containing metal, the cathode has a cathode active material, and the cathode active material contains a metal oxide containing nickel.

EP 4 135 072 A1

**Description**

[Technical Field]

The present invention relates to a lithium secondary battery.
Priority is claimed on Japanese Patent Application No. 2020-070382, filed April 9, 2020, the content of which is incorporated herein by reference.

[Background Art]

Rechargeable lithium secondary batteries have been already in practical use not only for small power sources in mobile phone applications, notebook personal computer applications, and the like but also for medium-sized and large-sized power sources in automotive applications, power storage applications, and the like.
As for an anode included in a lithium secondary battery, studies are being conducted to improve battery performance by using a material having a theoretical capacity higher than that of graphite, which is an anode material in the related art. As such a material, as with graphite, for example, a metal material capable of occluding and releasing lithium ions has attracted attention. In the following description, an anode formed of a metal material may be referred to as a "metal anode".
As an example of the metal anode, for example, Patent Document 1 describes an anode which is a porous aluminum alloy and uses an anode active material for a secondary battery containing at least one kind of silicon or tin.

[Citation List]

[Patent Document]

[Patent Document 1]

JP-A-2011-228058

[Summary of Invention]

[Technical Problem]

As the application fields of lithium secondary batteries expand, a further improvement in the discharge capacity retention ratio is required. There is room for improvement in the lithium secondary battery in order to improve the discharge capacity retention ratio of the lithium secondary battery using the metal anode.
The present invention has been made in view of the above circumstances, and an object of the present invention is to provide a lithium secondary battery having a high discharge capacity retention ratio.
In this specification, the "discharge capacity retention ratio" means the ratio of a discharge capacity (numerator) to a charge capacity (denominator) during each charging or discharging.
In this specification, a case where a 50th discharge capacity is 90% or more of the retention ratio of a 10th charge/discharge capacity is evaluated as "high discharge capacity retention ratio".

[Solution to Problem]

The present invention includes the following [1] to [6].

[1] A lithium secondary battery including: an aluminum anode configured to occlude and release lithium ions; a cathode configured to occlude and release lithium ions; and an electrolyte, in which the aluminum anode is formed of an aluminum-containing metal, the cathode has a cathode active material, and the cathode active material contains a metal oxide containing nickel.
[2] The lithium secondary battery according to [1], in which, in the aluminum-containing metal, a non-aluminum metal phase is dispersed in an aluminum metal phase.
[3] The lithium secondary battery according to [1] or [2], in which the aluminum-containing metal has an average corrosion rate of 0.2 mm/year or less measured by an immersion test under the following immersion conditions,
[immersion conditions]

immersion solution: 3.5% NaCl aqueous solution adjusted to a pH of 3 using acetic acid as a pH adjuster,

immersion temperature: 30°C,
immersion time: 72 hours.

[4] The lithium secondary battery according to any one of [1] to [3], in which the aluminum-containing metal has a Vickers hardness of 10 Hv or more and 70 Hv or less.

[5] The lithium secondary battery according to any one of [1] to [4], in which the aluminum anode is a rolled material, and in a cumulative frequency distribution curve of an absolute value of an angle formed by a rolled surface of the aluminum anode and a plane perpendicular to a {111} plane, which is obtained by measuring a surface of the aluminum anode by an electron backscatter diffraction method, when a total is set to 100%, an angle at which a cumulative frequency from a low angle side is 50% or more is 20° or less.

[6] The lithium secondary battery according to any one of [1] to [5], in which the aluminum anode is a rolled material, and in a cumulative frequency distribution curve of an absolute value of an angle formed by a rolling direction of the aluminum anode and a normal to a {111} plane, which is obtained by measuring a surface of the aluminum anode by an electron backscatter diffraction method, when a total is set to 100%, an angle at which a cumulative frequency from a low angle side is 50% or more is 20° or less.

The present invention includes the following [7] to [13].

[7] A lithium secondary battery including: an aluminum anode configured to occlude and release lithium ions; a cathode configured to occlude and release lithium ions; and an electrolyte, the aluminum anode is a rolled material formed of an aluminum-containing metal, and in a cumulative frequency distribution curve of an absolute value of an angle formed by a rolled surface of the aluminum anode and a plane perpendicular to a {111} plane, which is obtained by measuring a surface of the aluminum anode by an electron backscatter diffraction method, when a total is set to 100%, an angle at which a cumulative frequency from a low angle side is 50% or more is 20° or less.

[8] A lithium secondary battery including: an aluminum anode configured to occlude and release lithium ions; a cathode configured to occlude and release lithium ions; and an electrolyte, the aluminum anode is a rolled material formed of an aluminum-containing metal, and in a cumulative frequency distribution curve of an absolute value of an angle formed by a rolling direction of the aluminum anode and a normal to a {111} plane, which is obtained by measuring a surface of the aluminum anode by an electron backscatter diffraction method, when a total is set to 100%, an angle at which a cumulative frequency from a low angle side is 50% or more is 20° or less.

[9] An aluminum anode configured to occlude and release lithium ions, in which the aluminum anode is a rolled material formed of an aluminum-containing metal, and in a cumulative frequency distribution curve of an absolute value of an angle formed by a rolled surface of the aluminum anode and a plane perpendicular to a {111} plane, which is obtained by measuring a surface of the aluminum anode by an electron backscatter diffraction method, when a total is set to 100%, an angle at which a cumulative frequency from a low angle side is 50% or more is 20° or less.

[10] An aluminum anode configured to occlude and release lithium ions, in which the aluminum anode is a rolled material formed of an aluminum-containing metal, and in a cumulative frequency distribution curve of an absolute value of an angle formed by a rolling direction of the aluminum anode and a normal to a {111} plane, which is obtained by measuring a surface of the aluminum anode by an electron backscatter diffraction method, when a total is set to 100%, an angle at which a cumulative frequency from a low angle side is 50% or more is 20° or less.

[11] The lithium secondary battery according to any one of [1] to [4], in which the aluminum anode is a rolled material, and in a cumulative frequency distribution curve of an absolute value of an angle formed by a rolled surface of the aluminum anode and a normal to a {111} plane, which is obtained by measuring a surface of the aluminum anode by an electron backscatter diffraction method, when a total is set to 100%, an angle at which a cumulative frequency from a low angle side is 50% or more is 20° or less.

[12] A lithium secondary battery including: an aluminum anode configured to occlude and release lithium ions; a cathode configured to occlude and release lithium ions; and an electrolyte, the aluminum anode is a rolled material formed of an aluminum-containing metal, and in a cumulative frequency distribution curve of an absolute value of an angle formed by a rolled surface of the aluminum anode and a normal to a {111} plane, which is obtained by measuring a surface of the aluminum anode by an electron backscatter diffraction method, when a total is set to 100%, an angle at which a cumulative frequency from a low angle side is 50% or more is 20° or less.

[13] An aluminum anode configured to occlude and release lithium ions, in which the aluminum anode is a rolled material formed of an aluminum-containing metal, and in a cumulative frequency distribution curve of an absolute value of an angle formed by a rolled surface of the aluminum anode and a normal to a {111} plane, which is obtained by measuring a surface of the aluminum anode by an electron backscatter diffraction method, when a total is set to 100%, an angle at which a cumulative frequency from a low angle side is 50% or more is 20° or less.

[Advantageous Effects of Invention]

According to the present invention, it is possible to provide a lithium secondary battery having a high discharge capacity retention ratio.

[Brief Description of Drawings]

Fig. 1A is a schematic configuration view showing an example of a lithium secondary battery.
Fig. 1B is a schematic configuration view showing an example of the lithium secondary battery.
Fig. 2 shows cumulative frequency distribution curves of aluminum anodes 11 to 14.

[Description of Embodiments]

<Lithium Secondary Battery>

A lithium secondary battery of the present embodiment will be described.
Hereinafter, the lithium secondary battery according to the present embodiment will be described with reference to the drawings. In all the drawings below, the dimensions and ratios of each constituent element are appropriately different in order to make the drawings easier to see.

[Overall Configuration]

The lithium secondary battery includes an aluminum anode capable of occluding and releasing lithium ions, a cathode capable of occluding and releasing lithium ions, and an electrolyte.
As the lithium secondary battery, there is a non-aqueous electrolytic solution type secondary battery using an electrolytic solution as an electrolyte.
Hereinafter, each configuration will be described.

<<Aluminum Anode>>

The aluminum anode is formed of an aluminum-containing metal. The aluminum anode is preferably any one of aluminum anodes 1 to 4 described below.

[Aluminum Anode 1]

The aluminum anode 1 is an aluminum-containing metal. In the aluminum-containing metal of the aluminum anode 1, a non-aluminum metal phase is dispersed in an aluminum metal phase.
Non-aluminum metal means a metal that does not contain aluminum.
The non-aluminum metal phase is preferably formed of a non-aluminum metal compound containing one or more selected from the group consisting of Si, Ge, Sn, Ag, Sb, Bi, In, and Mg.
The non-aluminum metal phase is more preferably formed of a non-aluminum metal compound containing one or more selected from the group consisting of Si, Ge, Sn, Ag, Sb, Bi, and In.
The non-aluminum metal phase is preferably formed of non-aluminum metal compound particles.
The non-aluminum metal compound forming the non-aluminum metal phase has a very large occlusion amount of lithium. Therefore, the non-aluminum metal compound has a large volume expansion during insertion of lithium and a large volume contraction during desorption of lithium.
The strain generated by the expansion and contraction develops into cracks of the non-aluminum metal compound particles, and refinement occurs in which the non-aluminum metal compound particles become smaller. The refinement of the non-aluminum metal compound acting as an anode active material during charging and discharging causes a shortening of the cycle life.
The aluminum anode 1 is a metal in which the non-aluminum metal phase is dispersed in the aluminum metal phase. In other words, the non-aluminum metal compound particles are coated with aluminum, which can form an alloy with lithium.
When the non-aluminum metal compound particles are coated with aluminum, the non-aluminum metal compound particles are less likely to crack and are therefore less likely to be refined. Therefore, even in a case where charging and discharging of the lithium secondary battery are repeated, an initial discharge capacity is easily retained.

That is, the discharge capacity retention ratio of the lithium secondary battery is less likely to decrease.

The amount of the non-aluminum metal phase in the aluminum anode 1 preferably satisfies 0.01 mass% or more and 8 mass% or less with respect to the total amount of the aluminum metal phase and the non-aluminum metal phase. The lower limit of the amount of the non-aluminum metal phase is preferably 0.02 mass%, more preferably 0.05 mass%, and particularly preferably 0.1 mass%.

The upper limit of the amount of the non-aluminum metal phase is preferably 7 mass%, more preferably 6 mass%, and particularly preferably 5 mass%.

The upper limit and the lower limit thereof can be randomly combined. As an example of the combination, the amount of the non-aluminum metal phase is 0.02 mass% or more and 7 mass% or less, 0.05 mass% or more and 6 mass% or less, and 0.1 mass% or more and 5 mass% or less.

When the amount of the non-aluminum metal phase is equal to or more than the lower limit, a metal or metal compound other than aluminum that can contribute to the occlusion of lithium can be sufficiently secured. When the amount of the non-aluminum metal phase is equal to or less than the upper limit, the dispersed state of the non-aluminum metal phase in the aluminum phase tends to be good. Furthermore, when the amount of the non-aluminum metal phase is equal to or less than the upper limit, rolling is easily performed.

The non-aluminum metal phase may contain an optional metal other than Si, Ge, Sn, Ag, Sb, Bi, In, and Mg. Examples of the optional metal include Mn, Zn, and Ni.

The aluminum anode 1 is preferably an Al-Si binary alloy, or an Al-Si-Mn ternary alloy. In the case of a ternary alloy, it is preferable that each metal is uniformly dissolved.

In a case where the non-aluminum metal phase is Si, Sr may be further contained in order to promote the refinement of the non-metal aluminum phase. As a method for adding Sr to promote the refinement of Si, the method described in Journal of Japan Institute of Light Metals Volume 37 Issue 2 (1987) pp 146-152 can be used.

In a binarized image of the aluminum anode 1 obtained under the following image acquisition conditions, the ratio of an area corresponding to the non-aluminum metal phase to the sum of an area corresponding to the aluminum phase and the area corresponding to the non-aluminum metal phase is preferably 10% or less.

· Image Acquisition Conditions

The aluminum anode 1 is rolled into a foil having a thickness of 0.5 mm. The foil is cut perpendicular to a rolling direction, and a cut surface is etched with a 1.0 mass% sodium hydroxide aqueous solution. The aluminum metal phase and the non-aluminum metal phase have different solubilities in sodium hydroxide. Therefore, by etching, a height difference between irregularities of a portion corresponding to the non-aluminum metal phase and a portion corresponding to the aluminum metal phase exposed on the cut surface is formed. Due to the height difference between irregularities, a clear contrast is shown during observation with a microscope, which will be described later.

Next, a cross-sectional image of the cut surface is acquired, and the cross-sectional image is subjected to image processing to obtain a binarized image in which a convex portion corresponding to the aluminum metal phase and a concave portion corresponding to the non-aluminum metal phase are each converted. The area of the concave portion corresponds to the area of the non-aluminum metal phase.

The cross-sectional image can be acquired using, for example, a metallurgical microscope. In the present embodiment, a metallurgical micrograph having a magnification of 200 times or more and 500 times or less is acquired. In a case where an object having a size of 1 $\mu$m or less is observed in the observation with a microscope, for example, a scanning electron microscope (SEM) is used for the observation. In this case, an SEM image having a magnification of 100 times or more and 10,000 times or less is acquired.

As the metallurgical microscope, for example, Nikon EPIPHOT 300 can be used.

The obtained SEM image or metallurgical micrograph having the above magnification is taken into a computer and subjected to binarization processing using an image analysis software. The binarization processing is a process of performing binarization using an intermediate value between the maximum brightness and the minimum brightness in the image. By the binarization processing, for example, a binarized image in which the portion corresponding to the aluminum metal phase is white and the portion corresponding to the non-aluminum metal phase is black can be obtained.

As the image analysis software, software that enables the binarization processing can be appropriately selected. As the image analysis software, specifically, Image J, Photoshop, Image Pro Plus, or the like can be used.

In the binarized image, the area corresponding to the aluminum metal phase is referred to as S1 and the area corresponding to the non-aluminum metal phase is referred to as S2.

The ratio $(S2 / [S1 + S2]) \times 100$ (%) of S2 to the sum of S1 and S2 satisfies preferably 10% or less, more preferably 6% or less, and particularly preferably 3% or less.

When the ratio of S2 is equal to or less than the upper limit, the non-aluminum metal compound is sufficiently coated with aluminum, so that the non-aluminum metal compound is even less likely to crack. Therefore, even in a case where charging and discharging of the lithium secondary battery are repeated, the initial discharge capacity is easily retained.

(Dispersed State)

In the aluminum anode 1, the non-aluminum metal phase is dispersed in the aluminum metal phase. Here, "the non-aluminum metal phase is dispersed in the aluminum metal phase" means a state in which non-aluminum metal compound particles are present in an aluminum metal matrix.

For example, when the shape surrounded by the outer periphery of the concave portion corresponding to the non-aluminum metal compound phase observed in a case of observing the cross section of the foil-shaped aluminum anode 1 having a thickness of 0.5 mm is regarded as the cross section of one particle, the number of particles observed preferably satisfies both the following conditions (1) and (2).

Condition (1): The number density of non-aluminum metal compound particles having a particle size of 0.1 $\mu$m or more and less than 100 $\mu$m is 1000 /mm$^2$ or less.

Condition (2): The number density of non-aluminum metal compound particles having a particle size of 100 $\mu$m or more is 25 /mm$^2$ or less.

Regarding the particle size of the non-aluminum metal compound particle, for example, when a projected image of the cross-sectional shape of the non-aluminum metal compound particle from an SEM image photograph or metallurgical micrograph is sandwiched between parallel lines drawn in a certain direction, the distance (unidirectional particle diameter) between the parallel lines is measured as the particle size of the non-aluminum metal compound particle.

In addition, the "number density" means the density of the number of non-aluminum metal compound particles existing per unit area in the SEM photograph and the metallurgical micrograph.

(Manufacturing Method of Aluminum Anode 1)

The aluminum anode 1 is preferably manufactured by a manufacturing method including a step of casting an alloy and a rolling step.

· Step of Casting Alloy

In a case where casting is performed, first, a predetermined amount of the metal forming the non-aluminum metal phase is added to aluminum or high-purity aluminum to obtain a mixture 1. High-purity aluminum can be obtained by the method described later. Next, the mixture 1 is melted at 680°C or higher and 800°C or lower to obtain a molten alloy 1 of aluminum and the metal.

As the aluminum forming the aluminum phase, aluminum having a purity of 99.9 mass% or more, high-purity aluminum having a purity of 99.99 mass% or more, or the like can be used.

The metal forming the non-aluminum metal phase is one or more metals selected from the group consisting of Si, Ge, Sn, Ag, Sb, Bi, In, and Mg. As the metal forming the non-aluminum metal phase, for example, high-purity silicon having a purity of 99.999 mass% or more is used.

The molten alloy 1 is preferably subjected to a cleaning treatment of removing gas and non-metallic inclusions. Examples of the cleaning treatment include the addition of a flux, a treatment of blowing an inert gas or chlorine gas, and a vacuum treatment of molten aluminum.

The vacuum treatment is performed, for example, under the condition of 700°C or higher and 800°C or lower, 1 hour or longer and 10 hours or shorter, and a degree of vacuum of 0.1 Pa or more and 100 Pa or less.

The molten alloy 1 cleaned by the vacuum treatment or the like is cast into an ingot using a mold.

As the mold, an iron mold or a graphite mold heated to 50°C or higher and 200°C or lower is used. The aluminum anode 1 can be cast by a method of pouring the molten alloy 1 at 680°C or higher and 800°C or lower into a mold. Alternatively, an ingot may also be obtained by semi-continuous casting.

· Rolling Step

The obtained alloy ingot can be directly cut and used as the aluminum anode 1. It is preferable that the ingot is rolled, extruded, forged, or the like to form a plate material. The ingot is more preferably rolled.

The rolling step of the ingot is, for example, a step of processing the ingot into a plate material by performing hot rolling and cold rolling.

The hot rolling is repeatedly performed, for example, under the condition of a temperature of 350°C or higher and 550°C or lower and a working ratio per rolling pass of 2% or more and 30% or less until the aluminum ingot has a desired thickness. Here, the "working ratio" means the rate of change in thickness when rolling is performed. For example, in a case where a plate having a thickness of 1 mm is worked to have a thickness of 0.7 mm, the working ratio is 30%.

After the hot rolling, it is preferable to perform an intermediate annealing treatment before the cold rolling, as necessary. The intermediate annealing treatment is performed, for example, by heating the hot-rolled plate material to raise the temperature, and then allowing the heated plate material to cool.

In the temperature raising step in the intermediate annealing treatment, the temperature may be raised to, for example, 350°C or higher and 550°C or lower. In addition, in the temperature raising step, for example, the temperature of 350°C or higher and 550°C or lower may be held for about 1 hour or longer and 5 hours or shorter.

In the cooling step in the intermediate annealing treatment, cooling may be performed immediately after the temperature is raised. In the cooling step, it is preferable to allow the plate material to cool to about 20°C.

The cooling step may be appropriately adjusted according to a desired size of the non-aluminum metal phase. When the cooling step is performed by allowing the plate material to cool rapidly, the non-aluminum metal phase tends to become smaller. On the other hand, when the cooling step is performed at a moderate cooling rate, the crystal structure of the metal forming the non-aluminum metal phase tends to grow.

It is preferable that the cold rolling is performed at a temperature lower than the recrystallization temperature of aluminum. In addition, it is preferable that the aluminum ingot is repeatedly rolled to have a desired thickness under the condition in which the rolling reduction per rolling pass is 1% or more and 20% or less. As for the temperature of the cold rolling, the temperature of the metal to be rolled may be adjusted to 10°C or higher to 80°C or lower.

After the cold rolling, a heat treatment may further be performed. The heat treatment after the cold rolling is usually performed in the atmosphere, but may be performed in a nitrogen atmosphere, a vacuum atmosphere, or the like. There are cases where various physical properties, specifically, hardness, conductivity, and tensile strength are adjusted by controlling the crystal structure, in addition to by softening the work-hardened plate material by the heat treatment.

Examples of the heat treatment conditions include conditions in which a heat treatment is performed at a temperature of 300°C or higher and 400°C or lower for 3 hours or longer and 10 hours or shorter.

The aluminum anode 1 is preferably a metal foil.

The thickness of the metal foil is preferably 5 $\mu$m or more, more preferably 6 $\mu$m or more, and even more preferably 7 $\mu$m or more. In addition, the thickness is preferably 200 $\mu$m or less, more preferably 190 $\mu$m or less, and even more preferably 180 $\mu$m or less.

The upper limit and the lower limit of the thickness of the metal foil can be randomly combined. The thickness of the metal foil is preferably 5 $\mu$m or more and 200 $\mu$m or less.

The thickness of the metal foil may be measured using a thickness gauge or a caliper.

The aluminum anode 1 may be anode active material particles in the form of a powder having an average particle size of 1 $\mu$m or more and 20 $\mu$m or less. The anode active material particles can be obtained by crushing the ingot obtained by the above casting step.

The crushing method is not particularly limited, and a method using a ball mill, a bead mill, or the like and a method using a jet mill or the like may be used.

A method of manufacturing the powder is not particularly limited, and for example, the powder can also be manufactured by an atomizing method in which molten aluminum is ejected from a nozzle.

The average particle size of the anode active material particles in the form of the powder can be measured by, for example, a laser diffraction method.

· Aluminum Purification Method

In a case of using high-purity aluminum as the material of the aluminum anode or the material of the alloy, examples of a refining method for purifying aluminum include a segregation method and a three-layer electrolytic method.

The segregation method is a purification method utilizing the segregation phenomenon during solidification of molten aluminum, and a plurality of methods have been put into practical use. As one form of the segregation method, there is a method of pouring molten aluminum into a container, and allowing refined aluminum to solidify from the bottom portion while heating and stirring the molten aluminum at the upper portion while rotating the container. By the segregation method, high-purity aluminum having a purity of 99.99 mass% or more can be obtained.

The three-layer electrolytic method is an electrolytic method for purifying aluminum. As one form of the three-layer electrolytic method, first, aluminum or the like having a relatively low purity (for example, a grade of a purity of 99.9 mass% or less in JIS-H2102) is put into an Al-Cu alloy layer. Thereafter, in the method, with an anode in a molten state, an electrolytic bath containing, for example, aluminum fluoride and barium fluoride is disposed thereon, and high-purity aluminum is deposited on a cathode.

High-purity aluminum having a purity of 99.999 mass% or more can be obtained by the three-layer electrolytic method.

The method of purifying aluminum is not limited to the segregation method and the three-layer electrolytic method, and other known methods such as a zone melting refining method and an ultra-high vacuum melting method may be used.

[Aluminum Anode 2]

The aluminum anode 2 is an aluminum-containing metal. The aluminum anode 2 satisfies an average corrosion rate of 0.2 mm/year or less measured by an immersion test under the following immersion conditions.

(Immersion Conditions)

The aluminum-containing metal is formed into a test metal piece having a size of 40 mm in length, 40 mm in width, and 0.5 mm in thickness.
The test metal piece is immersed in a 3.5% NaCl aqueous solution adjusted to a pH of 3 using acetic acid as a pH adjuster, and the test metal piece is taken out after 72 hours. As for the immersion temperature, the temperature of the liquid is set to 30°C.
The degree of corrosion is represented by the amount of corrosion loss per day for a surface area of 1 mm$^2$ of the test metal piece in mg. That is, the degree of corrosion can be calculated by the following expression. A precision balance is used for measuring the mass.

$$\text{Degree of corrosion} = (\text{mass before immersion of test metal piece (mg)} - \text{mass after immersion of test metal piece (mg)}) / (\text{surface area of test metal piece (mm}^2) \times \text{number of test days (day)})$$

From the obtained degree of corrosion, the corrosion rate is calculated by the following method.

$$\text{Corrosion rate (mm/year)} = [\text{degree of corrosion} \times 365] / \text{density of test piece (g/cm}^3)$$

The test metal piece may be washed with ethanol or the like before being immersed in the 3.5% NaCl aqueous solution adjusted to a pH of 3.
The aluminum anode 2 is preferably made of an aluminum-containing metal represented by Composition Formula (1).

$$Al_x M^1_y M^2_z \dots \qquad (1)$$

(in Formula (1), $M^1$ is one or more selected from the group consisting of Mg, Ni, Mn, Zn, Cd, and Pb, $M^2$ is an unavoidable impurity, and 0 mass% $\leq y \leq$ 8 mass% and $[x / (x + z)] \geq$ 99.9 mass% are satisfied).

· $M^1$

In Formula (1), $M^1$ is more preferably one or more elements selected from the group consisting of Mg, Ni, Mn, and Zn.

· y

In Formula (1), y satisfies preferably 0.1 mass% $\leq y \leq$ 8.0 mass%, preferably 0.5 mass% $\leq y \leq$ 7.0 mass%, and particularly preferably 0.7 mass% $\leq y \leq$ 6.0 mass%.
When the range of y is equal to or more than the above lower limit, the average corrosion rate can be controlled within the above range. In addition, when the range of y is equal to or less than the above upper limit, rolling can be performed without cracking during a rolling step at the time of casting.

· M2

In Formula (1), $M^2$ is an unavoidable impurity such as a manufacturing residue that is unavoidably incorporated in a refining step of high-purity aluminum, and specifically, is a metal component other than aluminum and $M^1$. Examples of the unavoidable impurity include iron and copper.

In Formula (1), z is 0.1 mass% or less, preferably 0.05 mass% or less, and even more preferably 0.01 mass% or less.

In Formula (1), [x / (x + z)] is preferably 99.95% or more, more preferably 99.99% or more, and particularly preferably 99.995% or more. The aluminum anode 2 contains highly pure aluminum in which [x / (x + z)] is equal to or more than the above lower limit. A refining method for purifying aluminum will be described later.

Among the aluminum-containing metals represented by Formula (1), those having y = 0 may be described as high-purity aluminum. Among the aluminum-containing metals represented by Formula (1), those having y exceeding 0 may be described as a high-purity aluminum alloy.

In the present embodiment, as the aluminum anode 2 represented by Composition Formula (1), the high-purity aluminum or the high-purity aluminum alloy according to any one of the following (1) to (5) is preferable.

(1) High-purity aluminum-magnesium alloy 1

An alloy of 99.999% pure aluminum and magnesium. The amount of magnesium is 0.1 mass% or more and 4.0 mass% or less in the total amount of the aluminum-containing metal. The average corrosion rate is 0.04 mm/year to 0.06 mm/year.

(2) High-purity aluminum-magnesium alloy 2

An alloy of 99.9% pure aluminum and magnesium. 0.1 mass% or more and 1.0 mass% or less is contained in the total amount of the aluminum-containing metal. The average corrosion rate is 0.1 mm/year to 0.14 mm/year.

(3) High-purity aluminum-nickel alloy

An alloy of 99.999% pure aluminum and nickel. The amount of magnesium is 0.1 mass% or more and 1.0 mass% or less in the total amount of the aluminum-containing metal. The average corrosion rate is 0.1 mm/year to 0.14 mm/year.

(4) High-purity aluminum-manganese-magnesium alloy

An alloy of 99.99% pure aluminum, manganese, and magnesium. The total amount of manganese and magnesium is 1.0 mass% or more and 2.0 mass% or less in the total amount of the aluminum-containing metal. The average corrosion rate is 0.03 mm/year to 0.05 mm/year.

(5) High-purity aluminum

99.999% pure aluminum. The average corrosion rate is 0.05 mm/year.

(Manufacturing Method of Aluminum Anode 2)

A manufacturing method of the aluminum anode 2 will be described separately for a manufacturing method 1 and a manufacturing method 2. The manufacturing method 1 is a manufacturing method in a case where the aluminum anode 2 is high-purity aluminum. The manufacturing method 2 is a manufacturing method in a case where the aluminum anode 2 is a high-purity aluminum alloy.

In the manufacturing method 1 and the manufacturing method 2, first, aluminum is purified. Examples of a method of purifying aluminum include the aluminum purification method described in (Manufacturing Method of Aluminum Anode 1).

Even in a case where aluminum is purified by the aluminum purification method, impurities such as manufacturing residues may be mixed. In the manufacturing method 1 and the manufacturing method 2, for example, the total amount of iron and copper contained in the aluminum is preferably 100 ppm or less, more preferably 80 ppm or less, and even more preferably 50 ppm or less.

· Manufacturing Method 1

The manufacturing method 1 preferably includes a step of casting high-purity aluminum and a rolling step.

·· Casting Step

The aluminum purified by the above-described method can be cast to obtain an aluminum ingot having a shape suitable for rolling.

In a case where casting is performed, for example, high-purity aluminum is melted at about 680°C or higher and 800°C or lower to obtain molten aluminum.

The molten aluminum is preferably subjected to a cleaning treatment of removing gas and non-metallic inclusions. Examples of the cleaning treatment include the same method as the cleaning treatment described for the aluminum anode 1.

The molten aluminum that has been cleaned is cast into an ingot using a mold.

As the mold, an iron mold or a graphite mold heated to 50°C or higher and 200°C or lower is used. The aluminum anode 2 can be cast by a method of pouring the molten aluminum at 680°C or higher and 800°C or lower into a mold. Alternatively, an ingot may also be obtained by semi-continuous casting.

·· Rolling Step

The obtained aluminum ingot can be directly cut and used as the aluminum anode 2. It is preferable that the aluminum ingot is rolled, extruded, forged, or the like to form a plate material. The ingot is more preferably rolled.

The rolling step can be performed by the same method as the rolling step described in the manufacturing method of the aluminum anode 1.

· Manufacturing Method 2

The manufacturing method 2 preferably includes a step of casting a high-purity aluminum alloy and a rolling step.

·· Casting Step

In a case where casting is performed, first, a predetermined amount of a metal element is added to high-purity aluminum to obtain a mixture 2. Next, the mixture 2 is melted at 680°C or higher and 800°C or lower to obtain a molten alloy 2 of aluminum and the metal.

The metal element to be added is preferably one or more metals selected from the group consisting of Mg, Ni, Mn, Zn, Cd, and Pb. The metal containing these elements to be added preferably has a purity of 99 mass% or more.

A high-purity aluminum alloy ingot is obtained by the same method as the casting step in the manufacturing method of the aluminum anode 1 except that the molten alloy 2 is used.

·· Rolling Step

The rolling step is performed by the same method as the above-described manufacturing method 1 of the aluminum anode 2.

The thickness of the metal foil of the aluminum anode 2 is preferably 5 $\mu$m or more, more preferably 6 $\mu$m or more, and even more preferably 7 $\mu$m or more. In addition, the thickness is preferably 200 $\mu$m or less, more preferably 190 $\mu$m or less, and even more preferably 180 $\mu$m or less.

The upper limit and the lower limit of the thickness of the metal foil of the aluminum anode 2 can be randomly combined. The thickness of the metal foil of the aluminum anode 2 is preferably 5 $\mu$m or more and 200 $\mu$m or less.

The aluminum anode 2 may be anode active material particles in the form of a powder having an average particle size of 1 $\mu$m or more and 20 $\mu$m or less. The anode active material particles can be obtained by crushing the ingot obtained by the above casting step.

The crushing method is not particularly limited, and a method using a ball mill, a bead mill, or the like and a method using a jet mill or the like may be used.

A method of manufacturing the powder is not particularly limited, and for example, the powder can be manufactured by an atomizing method in which molten aluminum is ejected from a nozzle.

The aluminum anode 2 may be a non-woven fabric made of aluminum fibers. The non-woven fabric made of aluminum may be obtained by a method in which aluminum fibers are obtained by a melt spinning method and then spray cotton-like fibers are rolled. The melt spinning method is a method of manufacturing fibers by pressurizing a high-purity molten aluminum and spraying the molten aluminum through a nozzle to cause the molten aluminum to rapidly cool and solidify. Examples of the aluminum fibers include aluminum fibers having a diameter of 5 μm or more and 200 μm, aluminum short fibers, and the like.

[Aluminum Anode 3]

The aluminum anode 3 is an aluminum-containing metal.

The Vickers hardness of the aluminum anode 3 is preferably 10 HV or more and 70 HV or less, more preferably 20 HV or more and 70 HV or less, even more preferably 30 HV or more and 70 HV or less, and particularly preferably 35 HV or more and 55 HV or less.

When the aluminum anode 3 occludes lithium, there are cases where strain is generated in the crystal structure.

It is presumed that when the Vickers hardness is equal to or less than the upper limit, strain in the crystal structure during occlusion of lithium by the aluminum anode 3 can be relaxed, and the crystal structure can be maintained. Therefore, the lithium secondary battery using the aluminum anode 3 can retain the discharge capacity even in a case where charging and discharging are repeated.

As the Vickers hardness, a value measured by the following method is used.

[Measurement Method]

As an index of the hardness of the aluminum anode 3, the Vickers hardness (HV0.05) is measured using a micro Vickers hardness tester.

The Vickers hardness is a value measured according to JIS Z 2244:2009 "Vickers hardness test - Test method". The Vickers hardness is measured by pressing a square-based pyramid diamond indenter into the surface of a test piece, which is the aluminum anode 3, releasing the test force, and then calculating the diagonal length of the indentation left on the surface.

In the above standards, the hardness symbol is set to be changed by the test force. In the present embodiment, for example, the micro Vickers hardness scale HV0.05 at a test force of 0.05 kgf (= 0.4903 N) is applied.

[Aluminum Anode 4]

The aluminum anode 4 is a rolled material formed of an aluminum-containing metal.

In the present embodiment, in a cumulative frequency distribution curve of the absolute value of an angle formed by a rolled surface of the aluminum anode 4 and a normal to a {111} plane, which is obtained by measuring the surface of the aluminum anode 4 by an EBSD method, when the total is set to 100%, the angle at which the cumulative frequency from a low angle side is 50% or more is 20° or less.

The EBSD method stands for an electron backscatter diffraction method.

In this specification, the "angle formed by the rolled surface and the normal to the {111} plane of the metal crystal contained in the base metal" is an angle between the projection of the normal to the {111} plane on the rolled surface and the normal to the {111} plane, and is an angle of 90° or less. In a case where the rolled surface and the normal to the {111} plane are parallel, the angle formed as described above is not present. In this case, the angle formed is 0°.

In this specification, "the angle formed by the rolled surface and a plane perpendicular to the {111} plane" is defined as follows.

As for the angle formed by a rolled surface α and a plane β perpendicular to the {111} plane, straight lines lα and lβ that pass through any point O on the line of intersection l between the two planes α and β and are respectively perpendicular to the line of intersection l on the rolled surface α and the plane β perpendicular to the {111} plane are drawn. The angle formed by the straight lines lα and lβ is defined as the angle formed by the rolled surface α and the plane β perpendicular to the {111} plane.

In this specification, the "absolute value of the angle" is an absolute value when the angle is expressed in ±180° notation.

In a cumulative frequency distribution curve of the absolute value of an angle formed by a rolling direction of the aluminum anode 4 and the normal to the {111} plane, which is obtained by measuring the surface of the aluminum anode 4 by the EBSD method, when the total is set to 100%, the angle at which the cumulative frequency from the low angle side is 50% or more is preferably 20° or less.

(EBSD method)

The EBSD method is widely used as a method for analyzing the orientation distribution of a crystal texture.

Generally, the EBSD method is used in a form in which a scanning electron microscope is equipped with an electron backscatter diffraction method.

As the scanning electron microscope, for example, JSM-7900F manufactured by JEOL Ltd. can be used.

As an electron backscatter diffraction detector, for example, Symmetry manufactured by Oxford Instruments can be used.

When using the EBSD method, it is preferable to first remove the coating formed on the surface of the aluminum anode 4 in order to acquire a clear electron backscatter diffraction image on the surface of the aluminum anode 4.

As a method for removing the coating on the surface, for example, chemical etching using an acid or the like or an ion etching using an argon ion or the like can be used.

Alternatively, the coating on the surface may be removed by mechanical polishing such as buffing.

From the viewpoint of preventing deterioration of the crystal texture due to the removal of the coating on the surface of the aluminum anode 4, a method of removing the coating on the surface by a flat surface argon ion milling method in which the surface of the aluminum anode 4 is obliquely irradiated with an argon ion beam so that the center of the argon ion beam and the center of rotation of a specimen are made eccentric to each other and thus a wide range is processed is preferable.

In a case of removing the coating on the surface of the aluminum anode 4 by the ion milling method, for example, IB-19520CCP manufactured by JEOL Ltd. can be used.

After removing the coating on the surface, the surface of the aluminum anode 4 is irradiated with an electron beam. Thereafter, the diffraction pattern of backscattered electrons is read by a device. The obtained diffraction pattern is taken into a computer, and the surface of the aluminum anode 4 is scanned while simultaneously performing crystal orientation analysis. Accordingly, indexing of crystals is performed at each measurement point such that the crystal orientation can be obtained. The crystal orientation calculated at each measurement point is recorded on the computer.

According to the crystal structure size of the aluminum anode 4, a pixel size is preferably 3 μm or less, and more preferably 1 μm or less. Regarding an analysis region, it is preferable to perform the analysis in a region of 10 mm$^2$ or more in consideration of variation depending on the location of the crystal texture.

From the crystal orientation information at each measurement point recorded on the computer, the cumulative frequency distribution curve of the absolute value of the angle formed by the rolled surface of the aluminum anode 4 and the normal to the {111} plane of the aluminum-containing metal crystal is obtained.

It can be determined that the smaller the angle, the higher the orientation. In the aluminum anode 4, in the obtained cumulative frequency distribution curve of the absolute value of the angle, when the total is set to 100%, the angle at which the cumulative frequency from the low angle side is 50% or more is preferably 20° or less, more preferably 15° or less, and even more preferably 12° or less.

In addition, from the crystal orientation information at each measurement point recorded on the computer, the cumulative frequency distribution curve of the absolute value of the angle formed by the rolling direction of the aluminum anode 4 and the normal to the {111} plane of the aluminum-containing metal crystal is obtained.

It can be determined that the smaller the angle, the higher the orientation. In the aluminum anode 4, in the obtained cumulative frequency distribution curve of the absolute value of the angle, when the total is set to 100%, the angle at which the cumulative frequency from the low angle side is 50% or more is preferably 20° or less, more preferably 15° or less, and even more preferably 12° or less.

When the angle at which the cumulative frequency from the low angle side is 50% or more is equal to or less than the upper limit, it is thought that the {111} plane of the crystal of the aluminum-containing metal is oriented so as to be perpendicular to the rolled surface of the aluminum anode 4. With such an orientation, a crystal plane orientation suitable for the desorption and insertion of lithium is achieved. In addition, it is presumed that a crystal texture that is easy to adapt to a volume change that occurs during the desorption and insertion of lithium is achieved. Therefore, when the aluminum anode 4 is used, the discharge capacity retention ratio of the lithium secondary battery can be improved.

The aluminum anode 1 may have the properties of the aluminum anode 2.

Specifically, it is preferable that the aluminum anode 1 satisfies an average corrosion rate of 0.2 mm/year or less measured by the immersion test under the above immersion conditions.

The aluminum anode 1 may have the properties of the aluminum anode 3.

Specifically, it is preferable that the aluminum anode 1 satisfies a Vickers hardness of 10 HV or more and 70 HV or less.

The aluminum anode 1 may have the properties of the aluminum anode 4.

Specifically, it is preferable that the aluminum anode 1 is a rolled material, and in the cumulative frequency distribution curve of the absolute value of the angle formed by the rolled surface of the aluminum anode and the normal to the {111} plane, which is obtained by measuring the surface of the aluminum anode by the electron backscatter diffraction method, when the total is set to 100%, the angle at which the cumulative frequency from the low angle side is 50% or more satisfies 20° or less.

The aluminum anode 1 may have the properties of the aluminum anode 4.

Specifically, it is preferable that the aluminum anode 1 is a rolled material, and in the cumulative frequency distribution curve of the absolute value of the angle formed by the rolling direction of the aluminum anode and the normal to the {111} plane, which is obtained by measuring the surface of the aluminum anode by the electron backscatter diffraction method, when the total is set to 100%, the angle at which the cumulative frequency from the low angle side is 50% or more satisfies 20° or less.

The aluminum anode 1 may have the properties of the aluminum anode 2 and the aluminum anode 3.

Specifically, it is preferable that the aluminum anode 1 satisfies an average corrosion rate of 0.2 mm/year or less measured by the immersion test under the above immersion conditions and a Vickers hardness of 10 HV or more and 70 HV or less.

The aluminum anode 2 may have the properties of the aluminum anode 3.

Specifically, it is preferable that the aluminum anode 2 satisfies a Vickers hardness of 10 HV or more and 70 HV or less.

The aluminum anode 1 may have the properties of the aluminum anode 2, the aluminum anode 3, and the aluminum anode 4.

Specifically, it is preferable that the aluminum anode 1 satisfies an average corrosion rate of 0.2 mm/year or less measured by the immersion test under the above immersion conditions and a Vickers hardness of 10 HV or more and 70 HV or less, the aluminum anode 1 is a rolled material, and in the cumulative frequency distribution curve of the absolute value of the angle formed by the rolled surface of the aluminum anode and the normal to the {111} plane, which is obtained by measuring the surface of the aluminum anode by the electron backscatter diffraction method, when the total is set to 100%, the angle at which the cumulative frequency from the low angle side is 50% or more satisfies 20° or less.

The aluminum anode 1 may have the properties of the aluminum anode 2, the aluminum anode 3, and the aluminum anode 4.

Specifically, it is preferable that the aluminum anode 1 satisfies an average corrosion rate of 0.2 mm/year or less measured by the immersion test under the above immersion conditions and a Vickers hardness of 10 HV or more and 70 HV or less, the aluminum anode 1 is a rolled material, and in the cumulative frequency distribution curve of the absolute value of the angle formed by the rolling direction of the aluminum anode and the normal to the {111} plane, which is obtained by measuring the surface of the aluminum anode by the electron backscatter diffraction method, when the total is set to 100%, the angle at which the cumulative frequency from the low angle side is 50% or more satisfies 20° or less.

The aluminum anode 2 may have the properties of the aluminum anode 3 and the aluminum anode 4.

Specifically, it is preferable that the aluminum anode 2 satisfies a Vickers hardness of 10 HV or more and 70 HV or less, the aluminum anode 1 is a rolled material, and in the cumulative frequency distribution curve of the absolute value of the angle formed by the rolled surface of the aluminum anode and the normal to the {111} plane, which is obtained by measuring the surface of the aluminum anode by the electron backscatter diffraction method, when the total is set to 100%, the angle at which the cumulative frequency from the low angle side is 50% or more satisfies 20° or less.

The aluminum anode 2 may have the properties of the aluminum anode 3 and the aluminum anode 4.

Specifically, it is preferable that the aluminum anode 2 satisfies a Vickers hardness of 10 HV or more and 70 HV or less, the aluminum anode 1 is a rolled material, and in the cumulative frequency distribution curve of the absolute value of the angle formed by the rolling direction of the aluminum anode and the normal to the {111} plane, which is obtained by measuring the surface of the aluminum anode by the electron backscatter diffraction method, when the total is set to 100%, the angle at which the cumulative frequency from the low angle side is 50% or more satisfies 20° or less.

[Compositional Analysis of Aluminum Anode]

The compositional analysis of the aluminum anode can be performed using an optical emission spectrometer. Accordingly, the amount of metal elements in the aluminum-containing metal can be quantified.

As the optical emission spectrometer, for example, a model: ARL-4460, manufactured by Thermo Fisher Scientific can be used. Alternatively, the metal elements can be more accurately quantified by a glow discharge mass spectrometer.

(Anode Current Collector)

In a case where an anode current collector is used in the aluminum anode, as the material of the anode current collector, there is a strip-shaped member formed of a metal material, such as Cu, Ni, or stainless steel, as a forming material. Among these, it is preferable to use Cu as the forming material and process Cu into a thin film shape because Cu is less likely to form an alloy with lithium and can be easily processed.

As a method of causing the anode current collector to hold an anode mixture, there is a method using press-forming, or a method of forming the anode mixture into a paste using a solvent or the like, applying the paste onto the anode current collector, drying the paste, and pressing the paste to be compressed.

In a case where the aluminum anode is in the form of a foil, a plate, or a non-woven fabric, a portion of the form that does not react with lithium also serves as a current collector, so that it is not necessary to prepare a separate current collector.

<<Cathode>>

The cathode has a cathode active material.

The cathode active material contains a metal oxide containing nickel.

Examples of the metal oxide containing nickel include a lithium nickel composite compound having a layered structure, a lithium nickel cobalt composite oxide having a layered structure, and a lithium nickel cobalt manganese composite oxide having a layered structure.

As the metal oxide containing nickel, the metal oxide represented by Composition Formula (I) is preferable.

$$Li[Li_a(Ni_{(1-b)}M_b)_{1-a}]O_2 \qquad (I)$$

(M is one or more elements selected from the group consisting of Co, Mn, Fe, Cu, Ti, Mg, Al, W, B, Mo, Zn, Sn, Zr, Ga, Nb, and V, and $0 \leq a \leq 0.2$ and $0 < b \leq 0.7$ are satisfied)

In Composition Formula (I), a preferably satisfies $0 \leq a \leq 0.08$ and $0 \leq a \leq 0.06$.

In Composition Formula (I), b preferably satisfies $0.1 \leq b \leq 0.69$ and $0.2 \leq b \leq 0.68$.

Composition Formula (I) is preferably Composition Formula (I)-1.

$$Li[Li_x(Ni_{(1-s-t-u)}Co_sMn_tM_u)_{1-x}]O_2 \qquad (1)-1$$

(M is one or more elements selected from the group consisting of Fe, Cu, Ti, Mg, Al, W, B, Mo, Zn, Sn, Zr, Ga, Nb, and V, and $0 \leq x \leq 0.2$, $0 < s \leq 0.35$, $0 < t \leq 0.35$, $0 \leq u \leq 0.35$, and $0 < s+t+u \leq 0.7$ are satisfied)

In Composition Formula (I)-1, s preferably satisfies $0 < s \leq 0.33$ and $0 < s \leq 0.3$.

In Composition Formula (I)-1, t preferably satisfies $0 < t \leq 0.34$ and $0 < t \leq 0.33$.

In Composition Formula (I)-1, u preferably satisfies $0 \leq u \leq 0.3$ and $0 \leq u \leq 0.2$.

The cathode can be manufactured by adjusting a cathode mixture containing a metal oxide containing nickel as a cathode active material, a conductive material, and a binder, and causing a cathode current collector to hold the cathode mixture.

(Conductive Material)

As the conductive material, a carbon material can be used. As the carbon material, there are graphite powder, carbon black (for example, acetylene black), a fibrous carbon material, and the like. Since carbon black is fine particles and has a large surface area, the addition of a small amount of carbon black to a cathode mixture increases the conductivity inside the cathode and thus improves charge/discharge efficiencies and output characteristics.

The ratio of the conductive material in the cathode mixture is preferably 5 parts by mass or more and 20 parts by mass or less with respect to 100 parts by mass of the cathode active material. In a case of using a fibrous carbon material such as graphitized carbon fiber or carbon nanotube as the conductive material, the ratio can be reduced.

(Binder)

As the binder, a thermoplastic resin can be used. As the thermoplastic resin, there are fluorine resins such as polyvinylidene fluoride (hereinafter, sometimes indicated as PVdF), polytetrafluoroethylene (hereinafter, sometimes indicated as PTFE), tetrafluoroethylene-hexafluoropropylene-vinylidene fluoride copolymers, hexafluoropropylene-vinylidene fluoride copolymers, and tetrafluoroethylene-perfluorovinyl ether copolymers; and polyolefin resins such as polyethylene and polypropylene.

These thermoplastic resins may be used as a mixture of two or more. By using a fluorine resin and a polyolefin resin as the binder and setting the ratio of the fluorine resin to the entire cathode mixture to 1 mass% or more and 10 mass% or less and the ratio of the polyolefin resin to 0.1 mass% or more and 2 mass% or less, a cathode mixture having both high adhesion to the cathode current collector and high bonding strength in the cathode mixture can be obtained.

(Cathode Current Collector)

As the cathode current collector, a strip-shaped member formed of a metal material such as Al, Ni, or stainless steel as the forming material can be used. Among these, it is preferable to use Al as the forming material and process Al into a thin film shape because Al can be easily processed and is cheap.

As a method of causing the cathode current collector to hold the cathode mixture, there is a method of press-forming the cathode mixture on the cathode current collector. In addition, the cathode mixture may be held by the cathode current collector by forming the cathode mixture into a paste using an organic solvent, applying the obtained paste of the cathode mixture to at least one side of the cathode current collector, drying the paste, and pressing the paste to be fixed.

In a case of forming the cathode mixture into a paste, as an organic solvent which can be used, there are amine solvents such as N,N-dimethylaminopropylamine and diethylenetriamine; ether solvents such as tetrahydrofuran; ketone solvents such as methyl ethyl ketone; ester solvents such as methyl acetate; and amide solvents such as dimethylacetamide and N-methyl-2-pyrrolidone.

Examples of a method of applying the paste of the cathode mixture to the cathode current collector include a slit die coating method, a screen coating method, a curtain coating method, a knife coating method, a gravure coating method, and an electrostatic spraying method.

The cathode can be manufactured by the method mentioned above.

(Electrolyte)

The electrolyte included in the lithium secondary battery may be a liquid electrolyte or a solid electrolyte. As the liquid electrolyte, there is an electrolytic solution containing an electrolyte and an organic solvent.

· Electrolytic Solution

As an electrolyte contained in the electrolytic solution, there are lithium salts such as $LiClO_4$, $LiPF_6$, $LiAsF_6$, $LiSbF_6$, $LiBF_4$, $LiCF_3SO_3$, $LiN(SO_2CF_3)_2$, $LiN(SO_2C_2F_5)_2$, $LiN(SO_2CF_3)(COCF_3)$, $Li(C_4F_9SO_3)$, $LiC(SO_2CF_3)_3$, $L_{12}B_{10}Cl_{10}$, LiBOB (here, BOB refers to bis(oxalato)borate), LiFSI (here, FSI refers to bis(fluorosulfonyl)imide), lower aliphatic carboxylic acid lithium salts, $LiAlCl_4$, and the like, and a mixture of two or more of these may be used. Among these, as the electrolyte, it is preferable to use at least one selected from the group consisting of $LiPF_6$, $LiAsF_6$, $LiSbF_6$, $LiBF_4$, $LiCF_3SO_3$, $LiN(SO_2CF_3)_2$, and $LiC(SO_2CF_3)_3$, which contain fluorine.

As the organic solvent contained in the electrolytic solution, for example, carbonates such as propylene carbonate, ethylene carbonate, dimethyl carbonate, diethyl carbonate, ethyl methyl carbonate, 4-trifluoromethyl-1,3-dioxolan-2-one, and 1,2-di(methoxycarbonyloxy)ethane; ethers such as 1,2-dimethoxyethane, 1,3-dimethoxypropane, pentafluoropropyl methyl ether, 2,2,3,3-tetrafluoropropyl difluoromethyl ether, tetrahydrofuran, and 2-methyltetrahydrofuran; esters such as methyl formate, methyl acetate, propyl propionate, and $\gamma$-butyrolactone; nitriles such as acetonitrile and butyronitrile; amides such as N,N-dimethylformamide and N,N-dimethylacetamide; carbamates such as 3-methyl-2-oxazolidone; and sulfur-containing compounds such as sulfolane, dimethyl sulfoxide, and 1,3-propanesultone, or those obtained by introducing a fluoro group into these organic solvents (those in which one or more of the hydrogen atoms of the organic solvent are substituted with a fluorine atom) can be used.

As the organic solvent, it is preferable to use a mixture of two or more thereof. Among these, a mixed solvent containing a carbonate is preferable, and a mixed solvent of a cyclic carbonate and a non-cyclic carbonate and a mixed solvent of a cyclic carbonate and an ether are more preferable. As the mixed solvent of a cyclic carbonate and a non-cyclic carbonate, a mixed solvent containing ethylene carbonate, dimethyl carbonate, and ethyl methyl carbonate is preferable. An electrolytic solution using such a mixed solvent has many features such as a wide operating temperature range, being less likely to deteriorate even when charging or discharging is performed at a high current rate, being less likely to deteriorate even during a long-term use, and being nondegradable even in a case where a graphite material such as natural graphite or artificial graphite is used as the anode active material.

Furthermore, as the electrolytic solution, it is preferable to use an electrolytic solution containing a lithium salt containing fluorine such as $LiPF_6$ and an organic solvent having a fluorine substituent in order to enhance the safety of the obtained lithium secondary battery. A mixed solvent containing ethers having a fluorine substituent, such as pentafluoropropyl methyl ether and 2,2,3,3-tetrafluoropropyl difluoromethyl ether and dimethyl carbonate is even more preferable because the capacity retention ratio is high even when charging or discharging is performed at a high current rate.

The electrolytic solution may contain additives such as tris(trimethylsilyl) phosphate and tris(trimethylsilyl) borate.

· Solid Electrolyte

As the solid electrolyte, for example, an organic polymer electrolyte such as a polyethylene oxide-based polymer compound, or a polymer compound containing at least one or more of a polyorganosiloxane chain or a polyoxyalkylene chain can be used. A so-called gel type in which a non-aqueous electrolytic solution is held in a polymer compound can also be used. Inorganic solid electrolytes containing sulfides such as $Li_2S$-$SiS_2$, $Li_2S$-$GeS_2$, $Li_2S$-$P_2S_5$, $Li_2S$-$B_2S_3$, $Li_2S$-$SiS_2$-$Li_3PO_4$, $Li_2S$-$SiS_2$-$Li_2SO_4$, and $Li_2S$-$GeS_2$-$P_2S_5$ can be adopted, and a mixture of two or more thereof may be used. By using these solid electrolytes, the safety of the lithium secondary battery may be further enhanced.

In addition, in a case of using a solid electrolyte in a lithium secondary battery, there may be cases where the solid electrolyte acts as the separator, and in such a case, the separator may not be required.

(Separator)

In a case where a lithium secondary battery has a separator, as the separator, for example, a material having a form such as a porous film, non-woven fabric, or woven fabric made of a material such as a polyolefin resin such as polyethylene and polypropylene, a fluorine resin, and a nitrogen-containing aromatic polymer can be used. In addition, two or more of these materials may be used to form the separator, or these materials may be laminated to form the separator.

The air resistance of the separator according to the Gurley method defined by JIS P 8117 is preferably 50 sec/100 cc or more and 300 sec/100 cc or less, and more preferably 50 sec/100 cc or more and 200 sec/100 cc or less in order for the electrolyte to favorably permeate through the separator during battery use (during charging and discharging).

In addition, the porosity of the separator is preferably 30 vol% or more and 80 vol% or less, and more preferably 40 vol% or more and 70 vol% or less. The separator may be a laminate of separators having different porosities.

[Detailed Configuration: Cylindrical]

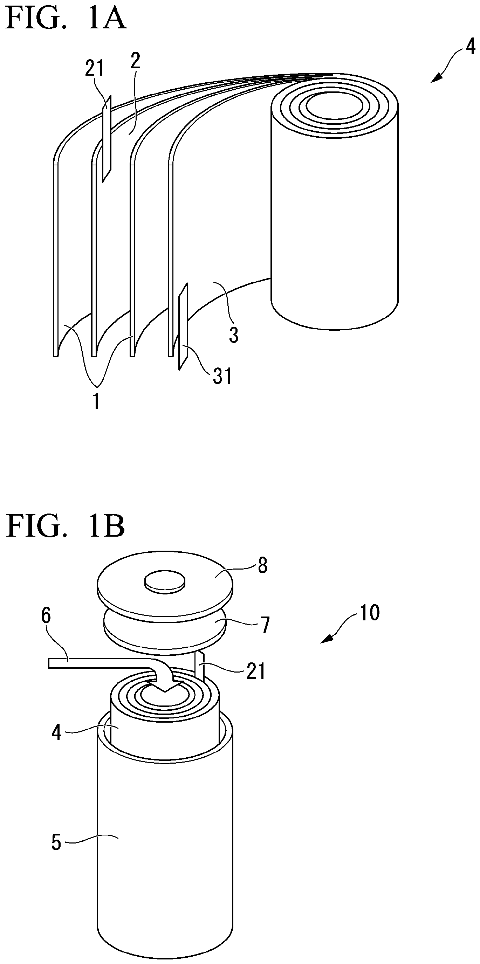

Figs. 1A and 1B are schematic views showing an example of the lithium secondary battery. A cylindrical lithium secondary battery 10 is manufactured as follows.

First, as shown in Fig. 1A, a pair of separators 1 having a strip shape, a strip-shaped cathode 2 having a cathode lead 21 at one end, and a strip-shaped aluminum anode 3 having an anode lead 31 at one end are laminated in order of the separator 1, the cathode 2, the separator 1, and the aluminum anode 3 and are wound to form an electrode group 4.

The material of the cathode lead 21 and the anode lead 31 can be appropriately selected from nickel, copper, iron, stainless steel, or aluminum. From the viewpoint of potentials, the cathode lead 21 and the anode lead 31 are preferably made of aluminum.

Next, as shown in Fig. 1B, the electrode group 4 and an insulator (not shown) are accommodated in a battery exterior body 5, the battery bottom is then sealed, the electrode group 4 is impregnated with an electrolytic solution 6, and an electrolyte is disposed between the cathode 2 and the anode 3. Furthermore, the upper portion of the battery exterior body 5 is sealed with a top insulator 7 and a sealing body 8, whereby the lithium secondary battery 10 can be manufactured.

The shape of the electrode group 4 is, for example, a columnar shape such that the cross-sectional shape when the electrode group 4 is cut in a direction perpendicular to the winding axis is a circle, an ellipse, a rectangle, or a rectangle with rounded corners.

In addition, as the shape of the lithium secondary battery having the electrode group 4, a shape defined by IEC60086 which is a standard for a battery defined by the International Electrotechnical Commission (IEC), or by JIS C 8500 can be adopted. Examples thereof include shapes such as a cylindrical type and an angular type.

Furthermore, the lithium secondary battery is not limited to the wound type configuration, and may have a stacked type configuration in which a laminated structure of a cathode, a separator, an aluminum anode, and a separator is repeatedly stacked. A so-called coin type battery, a button type battery, a paper type (or sheet type) battery, and an aluminum laminate type battery are exemplary examples of the stacked type lithium secondary battery.

[Aluminum Laminate Type Lithium Secondary Battery]

In a case where the lithium secondary battery is of an aluminum laminate type, it is preferable to add an excess electrolytic solution in order to prevent the electrolytic solution from being exhausted.

The aluminum anode expands during initial charging and becomes porous during subsequent discharging. Accordingly, pores are formed in the aluminum anode. Then, a volume of the electrolytic solution corresponding to the formed pores will be insufficient. Therefore, it is preferable to add an excess electrolytic solution to prevent a shortage of the electrolytic solution.

The material of leads connected to the aluminum anode and the sheet-shaped cathode can be appropriately selected from nickel, copper, iron, stainless steel, or aluminum. From the viewpoint of potentials, the leads are preferably made of aluminum.

[Solid Electrolyte Type Secondary Battery]

The lithium secondary battery may be a solid electrolyte type secondary battery using a solid electrolyte.

In the case of a solid electrolyte type secondary battery, a laminate in which an aluminum anode, a solid electrolyte layer, and a cathode are laminated in this order is preferably included.

The cathode preferably has pores on the surface being in contact with the solid electrolyte layer.

It is preferable that the material forming the solid electrolyte fills a part of the pores.

As the solid electrolyte, for example, a polymer electrolyte such as a polyethylene oxide-based polymer compound, or a polymer compound containing at least one or more of a polyorganosiloxane chain or a polyoxyalkylene chain can be used. Furthermore, when a sulfide electrolyte such as $Na_2S-SiS_2$, $Na_2S-GeS_2$, $Na_2S-P_2S_5$, $Na_2S-B_2S_3$, an inorganic compound electrolyte containing a sulfide such as $Na_2S-SiS_2-Na_3PO_4$, and $Na_2S-SiS_2-Na_2SO_4$, and a NASICON type electrolyte such as $NaZr_2(PO_4)_3$ are used as the solid electrolyte, the safety may be further enhanced.

When a part of the pores in the cathode is filled with the material forming the solid electrolyte, excellent ionic conductivity can be secured.

The porosity of the cathode is preferably 10% or more and 50% or less, more preferably 20% or more and 50% or less, and particularly preferably 30% or more and 50% or less.

Furthermore, it is preferable that at least 10% of the pores of the cathode are filled with the material forming the solid electrolyte.

<Evaluation Method of Lithium Secondary Battery>

The lithium secondary battery is evaluated by assembling a lithium secondary battery and measuring the discharge capacity retention ratio thereof.

[Production of Lithium Secondary Battery]

A polyethylene porous separator is disposed between the anode and the cathode and accommodated in a battery case (standard 2032), the electrolytic solution is injected, and the battery case is sealed, whereby a coin type (full cell) lithium secondary battery having a diameter of 20 mm and a thickness of 3.2 mm is produced.

[Production of Anode]

As the anode, any one of the above-mentioned aluminum anodes 1 to 4 is used.

[Production of Cathode]

The cathode is produced, for example, by the following method.

First, $LiNi_{0.5}Co_{0.2}Mn_{0.3}O_2$, a conductive material (acetylene black), and a binder (PVdF) are added in a compositional ratio of $LiNi_{0.5}Co_{0.2}Mn_{0.3}O_2$:conductive material:binder = 92:5:3 (mass ratio) and kneaded, whereby a paste-like cathode mixture is prepared. During the preparation of the cathode mixture, N-methyl-2-pyrrolidone is used as an organic solvent.

The obtained cathode mixture is applied to a 40 $\mu$m-thick Al foil serving as a current collector and vacuum-dried at 150°C for 8 hours to obtain a cathode. The electrode area of this cathode is set to 1.65 $cm^2$.

[Production of Electrolytic Solution]

In a mixed solvent prepared by mixing ethylene carbonate (EC) and diethyl carbonate (DEC) at EC:DEC = 30:70 (volume ratio), $LiPF_6$ is dissolved to 1 mol/liter to produce an electrolytic solution.

[Charge/Discharge Evaluation: Initial Charge/Discharge]

The separator is sufficiently impregnated with the electrolytic solution by allowing the coin type lithium secondary battery to stand at room temperature for 10 hours.

Next, initial charging and discharging are performed by performing constant current constant voltage charging for 5 hours in which constant current charging (occlusion of Li in Al) to 4.2 V at 1 mA is performed at room temperature and constant voltage charging at 4.2 V is then performed, and thereafter performing constant current discharging in which discharging (release of Li from Al) to 3.0 V at 1.0 mA is performed.

[Charge/Discharge Evaluation: Charge/Discharge Efficiency at Tenth Cycle and Twentieth Cycle]

After the initial charging and discharging, charging at 1.0 mA and discharging at 1.0 mA are repeated under the same conditions as in the initial charging and discharging.

The life is evaluated in tenth and twentieth cycle tests, and the charge/discharge efficiency is calculated by the following expression.

$$\text{Charge/discharge efficiency (\%) after ten cycles} = \text{discharge capacity at tenth cycle/charge capacity at tenth cycle} \times 100$$

$$\text{Charge/discharge efficiency (\%) after twenty cycles} = \text{discharge capacity at twentieth cycle/charge capacity at twentieth cycle} \times 100$$

A case where the discharge capacity retention ratio measured by the above method is 90% or more is evaluated as "high discharge capacity retention ratio".

[Examples]

Next, the present invention will be described in more detail with reference to examples.

<Compositional Analysis of Aluminum Anode>

The amounts of metal elements in an aluminum-containing metal were quantified using an optical emission spectrometer (model: ARL-4460, manufactured by Thermo Fisher Scientific).

<Observation of Non-Aluminum Metal Phase and Binarization Processing>

· Sample Production

A plate-shaped aluminum-containing metal having a thickness of 18 mm obtained by the method described later was rolled into a foil having a thickness of 0.5 mm. Thereafter, the foil was cut perpendicular to the rolling direction. The cut surface was polished with emery paper, buffed, and electropolished for 20 seconds. Thereafter, silicon forming a non-aluminum metal phase exposed on the cut surface was removed by etching with a 1.0 mass% sodium hydroxide aqueous solution.

Next, the obtained cross section was observed using a metallurgical microscope (Nikon EPIPHOT 300) at a magnification of 200 times.

Using image analysis software (Image-Pro Plus), the obtained image was binarized for simple binarization of the aluminum metal phase to white and the non-aluminum metal phase to black.

<Measurement of Average Corrosion Rate>

[Immersion Conditions]

The aluminum-containing metal obtained by the method described later was formed into a test metal piece having a size of 40 mm in length, 40 mm in width, and 0.5 mm in thickness. The surface of the test metal piece was washed with ethanol. The test metal piece was immersed in a 3.5% NaCl aqueous solution adjusted to a pH of 3 using acetic acid as a pH adjuster, and the test metal piece was taken out after 72 hours. As for the immersion temperature, the temperature of the liquid was set to 30°C.

The degree of corrosion was represented by the amount of corrosion loss per day for a surface area of 1 $mm^2$ of the test metal piece in mg. That is, the degree of corrosion was calculated by the following expression. A precision balance or the like was used for measuring the mass.

$$\text{Degree of corrosion} = \text{(mass before immersion of test metal piece (mg) - mass after immersion of test metal piece (mg)) / (surface area of test metal piece} \times \text{number of test days)}$$

From the obtained degree of corrosion, the corrosion rate was calculated by the following method.

$$\text{Corrosion rate (mm/year)} = [\text{degree of corrosion} \times 365] \text{ / density of test piece (g/cm}^3)$$

(Vickers Hardness)

As an index of the hardness of the aluminum-containing metal obtained by the method described later, the Vickers hardness (HV0.05) was measured using a micro Vickers hardness tester.

The Vickers hardness is a value measured according to JIS Z 2244:2009 "Vickers hardness test - Test method". A micro Vickers hardness tester of Shimadzu Corporation was used for the measurement.

The Vickers hardness was measured by pressing a square-based pyramid diamond indenter into the surface of a test piece (metal foil), releasing the force (test force) pressing the indenter, and then calculating the diagonal length of the indentation left on the surface.

In the present example, the micro Vickers hardness scale HV0.05 at a test force of 0.05 kgf (= 0.4903 N) was adopted.

<Removal of Surface Coating by Argon Ion Milling (Flat Surface Argon Ion Milling Method)>

An aluminum anode was attached to a holder for a flat surface argon ion milling method, and a surface coating suitable for electron backscatter diffraction measurement was removed by an ion milling device to obtain a clean surface. Processing conditions for the ion milling were as follows.

Device: IB-19520CCP (manufactured by) JEOL Ltd.
Acceleration voltage: 6 kV
Processing time: 0.5 hours
Atmosphere: Air
Temperature: Room temperature

Next, for the surface of the aluminum anode with the clean surface, an electron backscatter diffraction image was acquired using a scanning electron microscope. Conditions for acquiring the electron backscatter diffraction image were as follows.

Device (scanning electron microscope): JSM-7900F (manufactured by) JEOL Ltd.
Device (Electron Backscatter Diffraction Detector): Oxford Instruments (manufactured by) Symmetry
Acceleration voltage: 15 kV
Current value: 72.5 nA

The obtained diffraction pattern was taken into a computer, and the surface of the aluminum anode was scanned while simultaneously performing crystal orientation analysis. The pixel size at the time of scanning was 1 $\mu$m, and the measurement was performed over a region of 12 mm$^2$.

In the above measurement, indexing of crystals was performed at each measurement point (measurement pixel) such that the crystal orientation could be obtained, and the crystal orientation calculated at each measurement point was recorded on the computer.

As for the index related to the plane orientation, a cumulative frequency distribution curve of the absolute value of an angle formed by a rolling direction of the aluminum anode and a normal to a (111) plane of the aluminum-containing metal crystal was obtained from the crystal orientation information at each measurement point recorded on the computer.

<<Example 1>>

[Production of Aluminum Anode]

A silicon-aluminum alloy used in Example 1 was manufactured by the following method.

High-purity aluminum (purity: 99.99 mass% or more) and silicon (purity: 99.999 mass% or more) manufactured by Kojundo Chemical Laboratory Co., Ltd. were heated to 760°C and held, whereby a molten Al-Si alloy having a silicon content of 1.0 mass% was obtained.

Next, the molten alloy was cleaned by being held at a temperature of 740°C for 2 hours under the condition of a degree of vacuum of 50 Pa.

The molten alloy was cast in a cast iron mold (22 mm × 150 mm × 200 mm) dried at 150°C to obtain an ingot.

Rolling was performed under the following conditions. After both surfaces of the ingot were subjected to scalping by 2 mm, cold rolling was performed from a thickness of 18 mm at a working ratio of 99.4%. The thickness of the obtained rolled material was 100 $\mu$m.

A high-purity aluminum-silicon alloy foil (thickness 100 $\mu$m) having an aluminum purity of 99.999% and a silicon content of 1.0 mass% was cut into a disk shape of $\varphi$14 mm to manufacture an aluminum anode 11.

As a result, the ratio of the area corresponding to the non-aluminum metal phase of the aluminum anode 11 was 4%.

The number density of a non-aluminum metal compound particles in which the particle size of the non-aluminum metal compound particles was 0.1 $\mu$m or more and less than 100 $\mu$m, which were observed in a case of observing the cross section of the foil-shaped aluminum anode 11 having a thickness of 0.5 mm, was 318 /mm$^2$.

Furthermore, in the aluminum anode 11, the number density of the non-aluminum metal compound particles having a particle size of 100 $\mu$m or more was 9 /mm$^2$.

Regarding the particle size of the non-aluminum metal compound particle, when a projected image of the cross-sectional shape of the non-aluminum metal compound particle from an SEM image photograph having a magnification of 10,000 times was sandwiched between parallel lines drawn in a certain direction, the distance (unidirectional particle diameter) between the parallel lines was measured as the particle size of the non-aluminum metal compound particle.

In addition, the "number density" means the density of the number of non-aluminum metal compound particles present per unit area in an SEM image photograph having a magnification of 10,000 times.

[Production of Anode]

A 100 $\mu$m rolled material was punched to a diameter of 16 mm to obtain an anode having an electrode area of 2.00 cm$^2$.

[Production of Cathode]

LiNi$_{0.5}$Co$_{0.2}$Mn$_{0.3}$O$_2$, a conductive material (acetylene black), and a binder (PVdF) were added in a compositional ratio of LiNi$_{0.5}$Co$_{0.2}$Mn$_{0.3}$O$_2$:conductive material:binder = 92:5:3 (mass ratio) and kneaded, whereby a paste-like cathode mixture was prepared. During the preparation of the cathode mixture, N-methyl-2-pyrrolidone was used as an organic solvent.

The obtained cathode mixture was applied to a 40 $\mu$m-thick Al foil serving as a current collector and vacuum-dried at 150°C for 8 hours to obtain a cathode sheet. This cathode sheet was punched to a diameter of 14 mm to obtain a cathode having an electrode area of 1.65 cm$^2$.

[Production of Electrolytic Solution]

In a mixed solvent prepared by mixing ethylene carbonate (EC) and diethyl carbonate (DEC) at EC:DEC = 30:70 (volume ratio), LiPF$_6$ was dissolved to 1 mol/liter to produce an electrolytic solution.

[Production of Lithium Secondary Battery]

A polyethylene porous separator was disposed between the anode and the cathode and accommodated in a battery case (standard 2032), the electrolytic solution was injected, and the battery case was sealed, whereby a coin type (full cell) lithium secondary battery having a diameter of 20 mm and a thickness of 3.2 mm was produced.

[Charge/Discharge Evaluation: Initial Charge/Discharge]

The separator was sufficiently impregnated with the electrolytic solution by allowing the coin type lithium secondary battery to stand at room temperature for 10 hours.

Next, initial charging and discharging were performed by performing constant current constant voltage charging for 5 hours in which constant current charging (occlusion of Li in Al) to 4.2 V at 1 mA was performed at room temperature and constant voltage charging at 4.2 V was then performed, and thereafter performing constant current discharging in which discharging (release of Li from Al) to 3.0 V at 1.0 mA was performed.

[Charge/Discharge Evaluation: Charge/Discharge Efficiency at Tenth Cycle and Twentieth Cycle]

After the initial charging and discharging, charging at 1.0 mA and discharging at 1.0 mA were repeated under the same conditions as in the initial charging and discharging.

The life was evaluated in tenth and twentieth cycle tests, and the charge/discharge efficiency was calculated by the following expression.

$$\text{Charge/discharge efficiency (\%) after ten cycles} = \text{discharge capacity at tenth}$$

$$\text{cycle/charge capacity at tenth cycle} \times 100$$

$$\text{Charge/discharge efficiency (\%) after twenty cycles} = \text{discharge capacity at}$$

$$\text{twentieth cycle/charge capacity at twentieth cycle} \times 100$$

[Calculation of Discharge Capacity Retention Ratio]

$$\text{Discharge capacity retention ratio (\%)} = \text{discharge capacity at the fiftieth cycle}$$

$$(\text{mAh/g}) / \text{discharge capacity at the tenth cycle (mAh/g)} \times 100$$

In Example 1, the charge/discharge efficiency calculated by the above method was 98.6% at the tenth cycle and 100% at the twentieth cycle. The discharge capacity retention ratio (%) at the fiftieth cycle with respect to the tenth cycle was 96.0%.

«Example 2»

A lithium secondary battery was manufactured by the same method as in Example 1 except that $LiNi_{1/3}Co_{1/3}Mn_{1/3}O_2$ was used as the metal oxide containing nickel in the production of the cathode.

In Example 2, the charge/discharge efficiency calculated by the above method was 99.0% at the tenth cycle and 99.7% at the twentieth cycle. The discharge capacity retention ratio (%) at the fiftieth cycle with respect to the tenth cycle was 94.2%.

<<Comparative Example 1>>

A lithium secondary battery was manufactured by the same method as in Example 1 except that $LiCoO_2$ was used as the cathode active material in the production of the cathode.

In Comparative Example 1, the charge/discharge efficiency calculated by the above method was 98.4% at the tenth cycle and 98.9% at the twentieth cycle. The discharge capacity retention ratio (%) at the fiftieth cycle with respect to the tenth cycle was 87.0%.

**EP 4 135 072 A1**

<<Comparative Example 2>>

A lithium secondary battery was produced in the same manner as in Example 1 except that $LiCoO_2$ was used as the cathode active material using an aluminum anode 12 manufactured in the same manner as in Example 1 except that a molten aluminum-silicon alloy having a silicon content of 1.0 mass% was obtained, cold-rolled, and then heat-treated at 350°C for 3 hours, and evaluated.

(Aluminum Anode 13)

An aluminum foil (thickness 100 $\mu$m) having a purity of 99.99% was used as an aluminum anode 13.

(Aluminum Anode 14)

An aluminum foil (thickness 100 $\mu$m) having a purity of 99.99%, which was subjected to a heat treatment at 350°C for 3 hours after cold rolling, was used as an aluminum anode 14.
Table 1 below shows the results of the physical properties of the aluminum anodes, the cathode material, the charge/discharge efficiency, and the discharge capacity retention ratio.

[Table 1]

| | Non-aluminum metal phase | Ratio of area corresponding to non-aluminum metal phase | Average corrosion rate | Vickers hardness | Angle at which cumulative frequency is 50% or more | Cathode |
|---|---|---|---|---|---|---|
| Comparative Example 1 | 1% Si heat treatment absent | 4% | 0.067 mm/year | 59.6 Hv | 9.5° | $LiCoO_2$ |
| Example 1 | | | | | | $LiNi_{0.5}Co_{0.2}Mn_{0.3}C_2$ |
| Example 2 | | | | | | $LiNi_{1/3}Co_{1/3}Mn_{1/3}O_2$ |
| Comparative Example 2 | 1% Si heat treatment present | 3.4% | 0.115 mm/year | 25.4 Hv | 22.5° | $LiCoO_2$ |

[Table 2]

| | Charge/discharge efficiency at tenth cycle (%) | Charge/discharge efficiency at twentieth cycle (%) | Fiftieth cycle/tenth cycle discharge capacity retention ratio (%) |
|---|---|---|---|
| Comparative Example 1 | 98.4 | 98.9 | 87.0 |
| Example 1 | 98.6 | 100 | 96.0 |
| Example 2 | 99.0 | 99.7 | 94.2 |
| Comparative Example 2 | 97.6 | 97.5 | 80 |

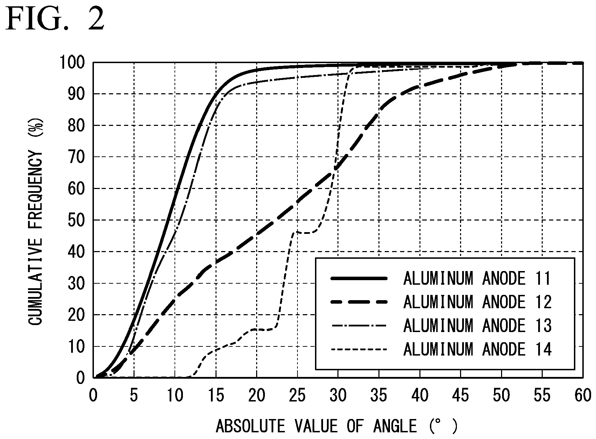

Fig. 2 shows cumulative frequency distribution curves of the absolute values of angles formed by the rolling direction of the aluminum anodes 11 to 14 and a normal to a (111) plane, which were obtained by measuring the aluminum anodes 11 to 14 by an electron backscatter diffraction method.
Table 3 shows the angles at which the cumulative frequency of the aluminum anodes 11 to 14 became 50% or more.

[Table 3]

|  | Angle at which cumulative frequency is 50% or more |
| --- | --- |
| Aluminum anode 11 | 9.5° |
| Aluminum anode 12 | 22.5° |
| Aluminum anode 13 | 10.5° |
| Aluminum anode 14 | 28.5° |

As shown in Table 2, the lithium secondary battery of the present embodiment showed a high discharge capacity retention ratio.

«Example 3»

A lithium secondary battery was manufactured by the same method as in Example 1 except that $LiNi_{0.8}Co_{0.15}Al_{0.05}O_2$ was used as the metal oxide containing nickel in the production of the cathode.

In Example 3, the charge/discharge efficiency calculated by the above method was 99.3% at the tenth cycle and 99.5% at the twentieth cycle. The discharge capacity retention ratio (%) at the fiftieth cycle with respect to the tenth cycle was 99.8%.

«Example 4»

A lithium secondary battery was manufactured by the same method as in Example 1 except that $LiNi_{0.6}Co_{0.2}Mn_{0.2}O_2$ was used as the metal oxide containing nickel in the production of the cathode.

In Example 4, the charge/discharge efficiency calculated by the above method was 99.3% at the tenth cycle and 99.8% at the twentieth cycle. The discharge capacity retention ratio (%) at the fiftieth cycle with respect to the tenth cycle was 100%.

<<Manufacturing Example 1>>

A lithium secondary battery can be manufactured by the same method as in Example 1 except that $LiNi_{0.8}Co_{0.1}Mn_{0.1}O_2$ is used as the metal oxide containing nickel in the production of the cathode.

[Reference Signs List]

1: Separator
2: Cathode
3: Aluminum anode
4: Electrode group
5: Battery can
6: Electrolytic solution
7: Top insulator
8: Sealing body
10: Lithium secondary battery
21: Cathode lead
31: Anode lead

Claims

1. A lithium secondary battery comprising:

an aluminum anode configured to occlude and release lithium ions;
a cathode configured to occlude and release lithium ions; and
an electrolyte,

wherein the aluminum anode is formed of an aluminum-containing metal,
the cathode has a cathode active material, and
the cathode active material contains a metal oxide containing nickel.

2. The lithium secondary battery according to Claim 1,
wherein, in the aluminum-containing metal, a non-aluminum metal phase is dispersed in an aluminum metal phase.

3. The lithium secondary battery according to Claim 1 or 2,

wherein the aluminum-containing metal has an average corrosion rate of 0.2 mm/year or less measured by an immersion test under the following immersion conditions,
[immersion conditions]
immersion solution: 3.5% NaCl aqueous solution adjusted to a pH of 3 using acetic acid as a pH adjuster,
immersion temperature: 30°C,
immersion time: 72 hours.

4. The lithium secondary battery according to any one of Claims 1 to 3,
wherein the aluminum-containing metal has a Vickers hardness of 10 Hv or more and 70 Hv or less.

5. The lithium secondary battery according to any one of Claims 1 to 4,

wherein the aluminum anode is a rolled material, and
in a cumulative frequency distribution curve of an absolute value of an angle formed by a rolled surface of the aluminum anode and a normal to a {111} plane, which is obtained by measuring a surface of the aluminum anode by an electron backscatter diffraction method, when a total is set to 100%, an angle at which a cumulative frequency from a low angle side is 50% or more is 20° or less.

6. The lithium secondary battery according to any one of Claims 1 to 5,

wherein the aluminum anode is a rolled material, and
in a cumulative frequency distribution curve of an absolute value of an angle formed by a rolling direction of the aluminum anode and a normal to a {111} plane, which is obtained by measuring a surface of the aluminum anode by an electron backscatter diffraction method, when a total is set to 100%, an angle at which a cumulative frequency from a low angle side is 50% or more is 20° or less.

FIG. 1A

FIG. 1B

# FIG. 2

<div align="center">

**INTERNATIONAL SEARCH REPORT**

</div>

| International application No. |
|---|
| PCT/JP2021/014746 |

**A. CLASSIFICATION OF SUBJECT MATTER**
Int. Cl. H01M4/46(2006.01)i, H01M4/525(2010.01)i, H01M10/052(2010.01)i
FI: H01M10/052, H01M4/46, H01M4/525

According to International Patent Classification (IPC) or to both national classification and IPC

**B. FIELDS SEARCHED**

Minimum documentation searched (classification system followed by classification symbols)
Int. Cl. H01M4/46, H01M4/525, H01M10/052

Documentation searched other than minimum documentation to the extent that such documents are included in the fields searched
Published examined utility model applications of Japan    1922-1996
Published unexamined utility model applications of Japan    1971-2021
Registered utility model specifications of Japan    1996-2021
Published registered utility model applications of Japan    1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2012-529747 A (3M INNOVATIVE PROPERTIES CO.) 22 November 2012, claims 9-18, paragraphs [0016]-[0025], examples 1-6 | 1-6 |
| X | JP 2019-175786 A (MAXELL HOLDINGS LTD.) 10 October 2019, claims 1-7, paragraphs [0016]-[0100], examples 1-8 | 1, 3-6 |
| A | | 2 |
| X | JP 2019-220380 A (MAXELL HOLDINGS LTD.) 26 December 2019, claim 1, paragraphs [0019], [0020], [0056]-[0083], examples 1-7 | 1, 3-6 |
| A | | 2 |
| X | JP 2002-008648 A (SANYO ELECTRIC CO., LTD.) 11 January 2002, claims 3-4, paragraphs [0006]-[0012], examples | 1, 3-6 |
| A | | 2 |

☒ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18.05.2021 | 01.06.2021 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2021/014746 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | WO 2012/147778 A1 (HITACHI, LTD.) 01 November 2012 | 1-6 |

Form PCT/ISA/210 (continuation of second sheet) (January 2015)

INTERNATIONAL SEARCH REPORT

Information on patent family members

International application No.

PCT/JP2021/014746

| Patent Documents referred to in the Report | Publication Date | Patent Family | Publication Date |
|---|---|---|---|
| JP 2012-529747 A | 22.11.2012 | US 2010/0310937 A1 claims 9-18, paragraphs [0031]- [0039], examples 1-6 WO 2010/144320 A2 EP 2441106 A2 KR 10-2012-0036945 A CN 102804457 A | |
| JP 2019-175786 A | 10.10.2019 | (Family: none) | |
| JP 2019-220380 A | 26.12.2019 | (Family: none) | |
| JP 2002-008648 A | 11.01.2002 | (Family: none) | |
| WO 2012/147778 A1 | 01.11.2012 | US 2014/0045055 A1 | |

Form PCT/ISA/210 (patent family annex) (January 2015)

**REFERENCES CITED IN THE DESCRIPTION**

**Patent documents cited in the description**

- JP 2020070382 A

- JP 2011228058 A

**Non-patent literature cited in the description**

- *Journal of Japan Institute of Light Metals,* 1987, vol. 37 (2), 146-152